(19) **Europäisches Patentamt / European Patent Office / Office européen des brevets**

(11) **EP 4 428 740 A1**

(12) **EUROPEAN PATENT APPLICATION**

(43) Date of publication:
**11.09.2024   Bulletin 2024/37**

(21) Application number: **23211788.7**

(22) Date of filing: **23.11.2023**

(51) International Patent Classification (IPC):
**G06F 30/25** $^{(2020.01)}$        **G06F 30/28** $^{(2020.01)}$
**G16C 10/00** $^{(2019.01)}$

(52) Cooperative Patent Classification (CPC):
**G06F 30/25; G06F 30/28**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **07.03.2023   KR 20230030018**

(71) Applicant: **Korea University Research and Business Foundation**
**Seoul 02841 (KR)**

(72) Inventors:
• **HAN, Jung Hyun**
  **Seoul (KR)**
• **KEE, Min Hyung**
  **Seoul (KR)**

(74) Representative: **Botti & Ferrari S.p.A.**
**Via Cappellini, 11**
**20124 Milano (IT)**

(54) **SPH-BASED HYPERELASTIC SIMULATION METHOD AND APPARATUS**

(57)    The present invention discloses a smoothed particle hydrodynamics (SPH)-based hyperelastic simulation method and apparatus. According to the invention, an SPH-based hyperelastic simulation apparatus includes a processor; and a memory connected to the processor, wherein the memory stores program instructions executed by the processor to define states of each of m particles in a discrete time as a set of positions and velocities, for an SPH-based deformable body composed of m particles, approximate hyperelastic energy of each of the m particles using a rest-pose volume, a material parameter, a vectorized deformation gradient, and a projection of the vectorized deformation gradient in order to optimize an objective function for solving new states of each of the m particles, search for an initial approximation of a Hessian matrix using the approximated hyperelastic energy, and simulate the SPH-based deformable body based on the searched initial approximation.

**EP 4 428 740 A1**

**Description**

[Technical Field]

The present invention relates to a physics-based animation technique, and more particularly, to a method an apparatus for simulating a smoothed particle hydrodynamics (SPH)-based hyperelastic deformable body.

[Background Art]

A representative example of the related art for simulating a SPH (Smoothed Particle Hydrodynamics)-based deformable body is the technology in the paper "Fast Corotated Elastic SPH Solids with Implicit Zero-Energy Mode Control" (hereinafter referred to as existing technique) published in the international journal, Proceedings of the ACM on Computer Graphics and Interactive Techniques (PACMCGIT).

This technology applies a backward Euler technique to approximate the next position and velocity of a deformable body made of particles, which is approximated as a problem of solving two linear systems in order.

Here, the solutions of the two linear systems are obtained by Cholesky Factorization and Preconditioned Conjugate Gradient, respectively.

The existing technique is a technique optimized for expressing the simplest Corotated model of hyperelastic models, and therefore, cannot simulate the movement of the SPH-based deformable body using more sophisticated models such as neo-Hookean or St. Venant-Kirchoff.

In addition, when a high elastic modulus or a large time step is used, the problem of unstable simulation results occurs.

[Disclosure]

[Technical Problem]

In order to solve the problems of the prior art described above, the present invention provides an SPH-based hyperelastic simulation method and apparatus capable of increasing accuracy while reducing complexity.

[Technical Solution]

In order to achieve the above object, according to one aspect of the present invention, a smoothed particle hydrodynamics (SPH)-based hyperelastic simulation apparatus includes: a processor; and a memory connected to the processor, in which the memory stores program instructions executed by the processor to define states of each of m particles in a discrete time as a set of positions and velocities, for an SPH-based deformable body composed of m particles, approximate hyperelastic energy of each of the m particles using a rest-pose volume, a material parameter, a vectorized deformation gradient, and a projection of the vectorized deformation gradient in order to optimize an objective function for solving new states of each of the m particles, search for an initial approximation of a Hessian matrix using the approximated hyperelastic energy, and simulate the SPH-based deformable body based on the searched initial approximation.

The deformation gradient may be defined by the following Equation.

[Equation]

$$\mathbf{F}_i = \sum_{j \in \mathcal{N}_i^0} V_j \mathbf{x}_{ji} \otimes \left( \mathbf{L}_i \nabla W_{ji} \right)$$

wherein, a subscript i may denote indexes of each particle, $\mathcal{N}_i^0$ may denote an initial neighbor set of particle i, $V_j$ may denote the rest-pose volume, $x_{ji} = x_j - x_i$, $\otimes$ may denote a Kronecker product operator (i.e. , $a \otimes b = ab^T$), $L_i$ may denote a kernel correction matrix and $W_{ji} = W(X_{ji}, r)$ , $X_{ji} = X_j - X_i$ and $W(\mathbf{X}, r) \colon \mathbb{R}^3 \to \mathbb{R}$ may denote an SPH kernel having a kernel radius r, and $\mathbf{x}$ and $\mathbf{X}$ may denote a deformed and reference (i.e., undeformed) position of the particle, respectively.

The hyperelastic energy may be defined by the following Equation.

[Equation]

$$E_{\text{he}}(\mathbf{x}) = \sum_i V_i \Psi(\mathbf{F}_i)$$

wherein, $\Psi$ denotes an elastic energy density function and varies depending on a type of elastic material of the deformable body.

The deformation gradient may be approximated through a zero energy mode.

The new state may be expressed by the following Equation.

[Equation]

$$\mathbf{x}_{n+1} = \mathbf{x}_n + h\mathbf{v}_{n+1}$$

$$\mathbf{v}_{n+1} = \mathbf{v}_n + h\mathbf{M}^{-1}(\mathbf{f}_{\text{ext}} + \mathbf{f}_{\text{int}}(\mathbf{x}_{n+1}))$$

wherein, h denotes a time step size, M may denote a mass matrix, $f_{\text{ext}}$ denotes external force, $f_{\text{int}}(x)$ denotes internal

force including elastic force and zero energy mode suppression force of an SPH framework, $\mathbf{x}(\in \mathbb{R}^{3m})$ denotes the position of the particle, and **V** denotes the velocity of the particle.

The internal force may be evaluated as a negative slope and the new state may be expressed by the following Equation.

[Equation]

$$\frac{\mathbf{M}}{h^2}(\mathbf{x}_{n+1} - \mathbf{y}_n) + \nabla E_{\text{he}}(\mathbf{x}_{n+1}) + \nabla E_{\text{ze}}(\mathbf{x}_{n+1}) = \mathbf{0}$$

wherein, $\mathbf{y}_n = \mathbf{x}_n + h\mathbf{v}_n + h^2\mathbf{M}^{-1}f_{\text{ext}}$.

The optimization problem of the objective function may be reformulated into the following Equation.

[Equation]

$$g(\mathbf{x}_{n+1}) = \frac{1}{2h^2}\|\mathbf{x}_{n+1} - \mathbf{y}_n\|_{\mathbf{M}}^2 + E_{\text{he}}(\mathbf{x}_{n+1}) + E_{\text{ze}}(\mathbf{x}_{n+1})$$

wherein, $\|\cdot\|_{\mathbf{M}}^2$ denotes a weighted Frobenius norm.

The program instructions may optimize the objective function through an iterative approach using a limited-memory Broyden-Fletcher-Goldfarb-Shanno (L-BFGS) algorithm.

According to another aspect of the invention, a smoothed particle hydrodynamics (SPH)-based hyperelastic simulation method in an apparatus including a processor and a memory includes: generating an SPH-based deformable body composed of m particles; defining states of each of m particles in a discrete time as a set of positions and velocities, for the SPH-based deformable body composed of the m particles; approximating hyperelastic energy of each of the m particles using a rest-pose volume, a material parameter, a vectorized deformation gradient, and a projection of the vectorized deformation gradient in order to optimize an objective function for solving new states of each of the m particles; searching for an initial approximation of a Hessian matrix using the approximated hyperelastic energy; and simulating the SPH-based deformable body based on the searched initial approximation.

According to still another aspect of the present invention, there is provided a computer program stored in a computer-readable recording medium performing the above-described method.

[Advantageous Effects]

According to the present invention, it is possible to simulate movement of an SPH-based deformable body using more sophisticated models such as neo-Hookean or St. Venant-Kirchoff.

In addition, according to the present invention, by expanding the existing technique to an optimization problem and solving it with limited-memory BFGS (L-BFGS), it is possible to generate stable simulation results even when using a high elastic modulus or a large time step compared to the existing technique.

[Brief Description of Drawings]

FIG. 1 is a diagram illustrating a configuration of an SPH-based hyperelastic simulation apparatus according to a preferred embodiment of the present invention.

FIG. 2 is a diagram illustrating an L-BFGS algorithm based on A0 according to the present embodiment.

FIG. 3 is a diagram illustrating results of a solver tested with various elastic models.

FIGS. 4A to 4D are diagrams illustrating simulation results according to the present embodiment and simulation results of the existing technique.

FIG. 5 is a diagram illustrating results of applying an L-BFGS algorithm according to the present embodiment and simulation results of the existing Newton's method.

[Best Mode]

Since the present invention may be variously modified and have several exemplary embodiments, specific exemplary embodiments will be illustrated in the accompanying drawings, and will be described in detail in a detailed description. However, it is to be understood that the present invention is not limited to a specific exemplary embodiment, but includes all modifications, equivalents, and substitutions without departing from the scope and spirit of the present invention.

The terms used in the present specification are used only in order to describe specific exemplary embodiments rather than limiting the present invention. Singular forms are intended to include plural forms unless the context clearly indicates otherwise. It should be further understood that terms "include" or "have" used herein specify the presence of features, numerals, steps, operations, components, parts described in the present specification, or combinations thereof, but do not preclude the presence or addition of one or more other features, numerals, steps, operations, components, parts, or combinations thereof.

In addition, components of the embodiments described with reference to each drawing are not limitedly applied only to the corresponding embodiment, and may be implemented to be included in other embodiments within the scope of maintaining the technical spirit of the present invention. In addition, it goes without saying that these components may also be re-implemented as one embodiment in which a plurality of embodiments are integrated, even if a separate description is omitted.

In addition, in the description with reference to the accompanying drawings, regardless of reference numerals, the same components will be given the same or related reference numerals and duplicate description thereof will be omitted. When it is decided that the detailed description of the known art related to the present invention may unnecessary obscure the gist of the present invention, a detailed description therefor will be omitted.

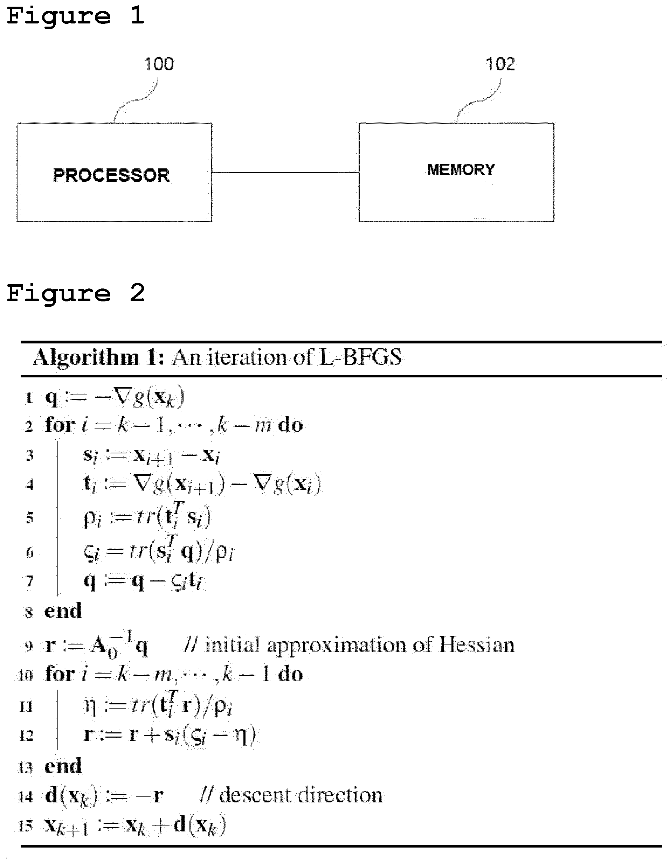

FIG. 1 is a diagram illustrating a configuration of an SPH-based hyperelastic simulation apparatus according to a preferred embodiment of the present invention.

As illustrated in FIG. 1, the SPH-based hyperelastic simulation apparatus may include a processor 100 and a memory 102.

The processor 100 may include a central processing unit (CPU) capable of executing a computer program, a graphics processing unit (GPU), other virtual machines, or the like.

The memory 102 may include a non-volatile storage device such as a non-removable hard drive or a removable storage device. The removable storage device may include a compact flash unit, a USB memory stick, and the like. The memory 102 may also include a volatile memory, such as various random access memories.

The memory 102 according to the present embodiment stores program instructions for SPH-based deformable body simulation composed of m particles.

Such program instructions may be stored in a computer-readable recording medium.

The program instructions according to the present embodiment defines states of each of m particles in a discrete time as a set of positions and velocities, for an SPH-based deformable body composed of m particles, approximates hyperelastic energy of each of the m particles using a rest-pose volume, a material parameter, a vectorized deformation gradient, and a projection of the vectorized deformation gradient in order to optimize an objective function for solving new states of each of the m particles, searches for an initial approximation of a Hessian matrix using the approximated hyperelastic energy, and simulates the SPH-based deformable body based on the searched initial approximation.

According to the present embodiment, the objective function is optimized through an iterative approach using a limited-memory Broyden-Fletcher-Goldfarb-Shanno (L-BFGS) algorithm.

Hereinafter, the SPH-based hyperelasticity simulation process according to the present embodiment will be described in detail.

The SPH-based hyperelastic simulation according to the present embodiment is based on deformation gradient and zero-energy mode suppression.

Hereinafter, these will be explained in detail.

Elastic energy models (corotated, Neo-Hookean, and St. Venant-Kirchoff, etc.) are widely used for deformable bodies having elasticity.

In general, the deformation gradient is expressed as $\mathbf{F} = \partial \mathbf{x}/\partial \mathbf{X} \quad (\in \mathbb{R}^{3 \times 3})$, where $\mathbf{x} \, (\in \mathbb{R}^3)$ and $\mathbf{X} \, (\in \mathbb{R}^3)$ denote deformed and reference (i.e., undeformed) positions, respectively.

The deformation gradient for the existing SPH-based deformable body is expressed as follows.

[Equation 1]

$$\mathbf{F}_i = \sum_{j \in \mathcal{N}_i^0} V_j \mathbf{x}_{ji} \otimes \left( \mathbf{L}_i \nabla W_{ji} \right)$$

wherein, a subscript i denotes indexes of each particle, $\mathcal{N}_i^0$ denotes an initial neighbor set of particle i, $V_j$ denotes the rest-pose volume, $\mathbf{x}_{ji} = \mathbf{x}_j - \mathbf{x}_i$, $\otimes$ denotes a Kronecker product operator (i.e., $\mathbf{a} \otimes \mathbf{b} = \mathbf{a}\mathbf{b}^T$), and $\mathbf{L}_i$ denotes a kernel correction matrix and $W_{ji} = W(\mathbf{X}_{ji}, r)$, in which $\mathbf{X}_{ji} = \mathbf{X}_j - \mathbf{X}_i$ and $W(\mathbf{X}, r): \mathbb{R}^3 \to \mathbb{R}$ denote an SPH kernel having a kernel radius r. The kernel correction matrix $\mathbf{L}_i$ is defined as follows.

[Equation 2]

$$\mathbf{L}_i = \left( \sum_{j \in \mathcal{N}_i^0} V_j \nabla W_{ji} \otimes \mathbf{X}_{ji} \right)^{-1}$$

Due to the above correction, a deformation gradient $\mathbf{F}_i$ satisfies a first-order consistency condition.

[Equation 3]

$$\sum_{j \in \mathcal{N}_i^0} V_j \mathbf{X}_{ji} \otimes \left( \mathbf{L}_i \nabla W_{ji} \right) = \mathbf{I}$$

wherein, it is important to capture rotational movement correctly.

The hyperelastic energy expressed as $E_{\text{he}}(\mathbf{x})$ is defined using the deformation gradient given in Equation 1.

[Equation 4]

$$E_{\text{he}}(\mathbf{x}) = \sum_i V_i \Psi(\mathbf{F}_i)$$

wherein, $\Psi$ denotes an elastic energy density function and may vary depending on a type of elastic material of the deformable body.

A well-known problem in approximating the deformation gradient given in Equation 1 is a zero energy mode.

The following denotes implicit penalty forces suppressing the previously proposed zero energy mode.

[Equation 5]

$$E_{ze}(\mathbf{x}) = \frac{\alpha}{2} \sum_i w_i V_i \left( \sum_{j \in \mathcal{N}_i^0} W_{ji} V_j \frac{\|\mathbf{e}_{ji}\|^2}{\|\mathbf{X}_{ji}\|^2} \right)$$

wherein, $\alpha$ denotes a user-defined parameter, $W_i$ denotes a material parameter that makes penalty force proportional to elastic force, and $\mathbf{e}_{ji}$ defined by $\mathbf{F}_i\mathbf{X}_{ji}$- $\mathbf{x}_{ji}$ denotes an error due to the zero energy mode.

Equation 5 may be expressed in a matrix-vector product form.

[Equation 6]

$$E_{ze}(\mathbf{x}) = \frac{1}{2}\mathbf{x}^T \mathbf{H} \mathbf{x}$$

Hereinafter, the optimization process will be described in detail.

Given a physical system composed of m particles, the state may be described as a set of positions

$$\mathbf{x}(\in \mathbb{R}^{3m})$$ and velocities $$\mathbf{v}(\in \mathbb{R}^{3m})$$ of the particles.

The physical system is evolved in discrete time samples $\{t_1, t_2, \cdots, t_N\}$.

Given the state of $t_n$, the implicit Euler scheme approximates the next state of $t_{n+1}$ as follows.

[Equation 7]

$$\mathbf{x}_{n+1} = \mathbf{x}_n + h\mathbf{v}_{n+1}$$

$$\mathbf{v}_{n+1} = \mathbf{v}_n + h\mathbf{M}^{-1}(\mathbf{f}_{ext} + \mathbf{f}_{int}(\mathbf{x}_{n+1}))$$

wherein, h denotes a time step size, M denotes a mass matrix, $f_{ext}$ denotes external force (e.g., gravity) and $f_{int}(x)$ denotes internal force including the elastic force and zero energy mode suppression force in an SPH framework.

The internal force can be evaluated as a negative slope of the internal energy, i.e., $\mathbf{f}_{int}(\mathbf{x}) = -(\nabla E_{he}(\mathbf{x}) + \nabla E_{ze}(\mathbf{x}))$, so Equation 7 can be rewritten as follows.

[Equation 8]

$$\frac{\mathbf{M}}{h^2}(\mathbf{x}_{n+1} - \mathbf{y}_n) + \nabla E_{he}(\mathbf{x}_{n+1}) + \nabla E_{ze}(\mathbf{x}_{n+1}) = \mathbf{0}$$

wherein, $y_n = x_n + hv_n + h^2M^{-1}f_{ext}$.

To solve a new state $x_{n+1}$ in Equation 8, it is reformulated as an optimization problem to find $x_{n+1}$ that minimizes the following objective function g(x).

[Equation 9]

$$g(\mathbf{x}_{n+1}) = \frac{1}{2h^2}\|\mathbf{x}_{n+1} - \mathbf{y}_n\|^2_{\mathbf{M}} + E_{he}(\mathbf{x}_{n+1}) + E_{ze}(\mathbf{x}_{n+1})$$

wherein, $\|\cdot\|_{\mathbf{M}}^2$ denotes a weighted Frobenius norm. To simplify notation, from now on, x is used instead of $x_{n+1}$.

The problem of optimizing the objective function given in Equation 9 may be solved using an iterative approach such as a Newton's method.

[Equation 10]

$$x_{k+1} = x_k - \left(\nabla^2 g(x_k)\right)^{-1} \nabla g(x_k)$$

wherein, the subscript indicates the number of times of iteration, and $x_0 = y_n$.

Despite the quick convergence characteristics of the Newton's method, the Newton's method should calculate a Hessian matrix $\nabla^2 g(x_k)$ per iteration of a solver and perform factorization, and therefore, has reduced efficiency.

In the present embodiment, the limited-memory Broyden-Fletcher-Goldfarb-Shanno (L-BFGS) algorithm is used.

For efficiency, the Hessian matrix $\nabla^2 g(x_k)$ is approximated using the curvature information of the m most recent iterations, i.e., $x_{k-m}, \cdots, x_{k-1}$.

The following shows the effective approximation of the matrix for the present embodiment and shows the efficiency for an optimization-based elastic SPH solid solver in experiments.

Hereinafter, the initial approximation of the Hessian matrix will be described.

The initial approximation of the Hessian matrix, denoted by $A_0$, has a significant impact on a convergence rate of the L-BFGS.

Therefore, to be close to the Hessian matrix $\nabla^2 g(x_k)$ and to avoid expensive Cholesky factorization during simulation, $A_0$ remaining constant is searched.

$\nabla^2 g(x^k) = \mathbf{M}/h^2 + \mathbf{H} + \nabla^2 E_{he}(x)$ and $\nabla^2 E_{he}(x)$ is the only non-constant term. Therefore, the goal may be achieved by replacing the non-constant term $\nabla^2 E_{he}(x)$ with "constant approximation".

To this end, in the present embodiment, the hyperelastic energy $E_{he,i}(x)$ per particle is first approximated as follows.

[Equation 11]

$$E_{he,i}(\mathbf{x}) \approx V_i \frac{w_i}{2} \|\text{vec}(\mathbf{F}_i) - \mathbf{z}_i\|^2$$

$w_i$ is composed of material parameters such as Poisson's ratio and Young's modulus, $\text{vec}(\cdot)$ vectorizes a 3×3 matrix into a 9×1 vector, and $\mathbf{Z}_i$ projects $\text{vec}(\mathbf{F}_i)$ onto a manifold that satisfies $E_{he,i}(\mathbf{x}) = 0$. It is worth noting that $\text{vec}(\mathbf{F}_i)$ may be expressed in a matrix-vector product form.

[Equation 12]

$$\text{vec}(\mathbf{F}_i) = \mathbf{D}_i \mathbf{x}$$

In the present embodiment, the desired "constant approximation" denoted by B is defined as follows.

[Equation 13]

$$\mathbf{B} = \sum_i V_i w_i \mathbf{D}_i^T \mathbf{D}_i$$

Finally, the initial approximation of the Hessian matrix $A_0$ is completed with B.

[Equation 14]

$$\mathbf{A}_0 = \frac{\mathbf{M}}{h^2} + \mathbf{H} + \mathbf{B}$$

FIG. 2 is a diagram illustrating an L-BFGS algorithm based on $A_0$ according to the present embodiment.

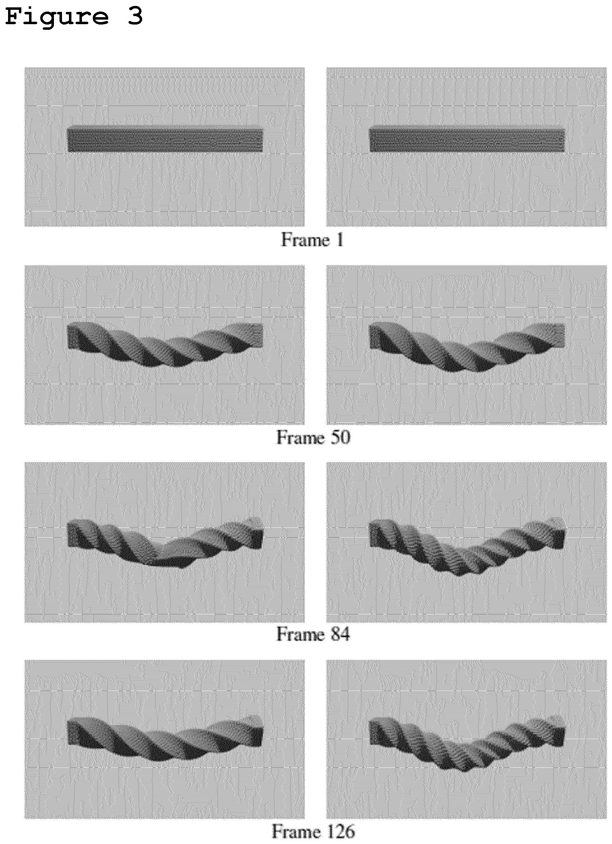

FIG. 3 is a diagram illustrating results of a solver tested with various elastic models.

Referring to FIG. 3, it can be seen that the model according to the present embodiment expresses a twist of an elastic beam better than the corotated model on the left.

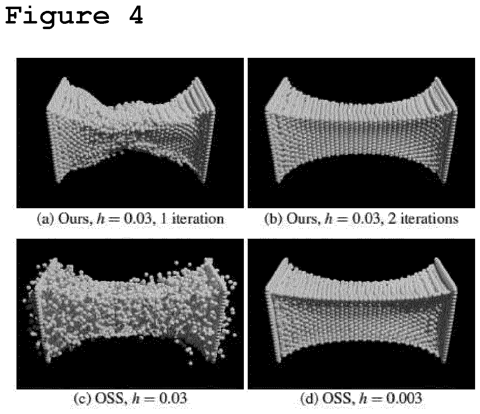

FIGS. 4A to 4D are diagrams illustrating simulation results according to the present embodiment and simulation results of the existing technique.

As illustrated in FIG. 4A, when the L-BFGS is performed once, the simulation is somewhat unstable, but as illustrated in FIG. 4B, when the number of times of L-BFGS progress is increased to twice, the simulation becomes stable immediately.

As illustrated in FIG. 4C, when the simulation is performed using the existing technique, it is unstable, and as illustrated in FIG. 4D, in order to stabilize the simulation using the existing technique, the size of h should be reduced, which has the problem of increasing complexity.

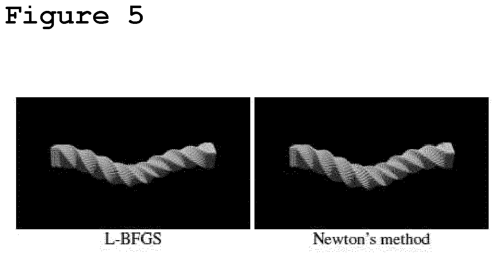

FIG. 5 is a diagram illustrating the results of applying the L-BFGS algorithm according to the present embodiment and the simulation results of the existing Newton's method. As a result, it can be seen that even if the L-BFGS algorithm according to the present embodiment is applied, there is no significant difference from the existing Newton's method.

The embodiments of the present invention described above have been disclosed for illustrative purposes, and those skilled in the art with ordinary knowledge of the present invention will be able to make various modifications, changes, and additions within the spirit and scope of the present invention, and these modifications, changes, and additions should be regarded as falling within the scope of the following claims.

**Claims**

1. A smoothed particle hydrodynamics (SPH)-based hyperelastic simulation apparatus, comprising:

   a processor; and
   a memory connected to the processor,
   wherein the memory stores program instructions executed by the processor to define states of each of m particles in a discrete time as a set of positions and velocities, for an SPH-based deformable body composed of m particles, approximate hyperelastic energy of each of the m particles using a rest-pose volume, a material parameter, a vectorized deformation gradient, and a projection of the vectorized deformation gradient in order to optimize an objective function for solving new states of each of the m particles,
   search for an initial approximation of a Hessian matrix using the approximated hyperelastic energy, and
   simulate the SPH-based deformable body based on the searched initial approximation.

2. The smoothed particle hydrodynamics (SPH)-based hyperelastic simulation apparatus of claim 1, wherein the deformation gradient is defined by the following Equation.

[Equation]

$$\mathbf{F}_i = \sum_{j \in \mathcal{N}_i^0} V_j \mathbf{x}_{ji} \otimes (\mathbf{L}_i \nabla W_{ji})$$

wherein, a subscript i denotes indexes of each particle, $\mathcal{N}_i^0$ denotes an initial neighbor set of particle i, $V_j$ denotes the rest-pose volume, $\mathbf{x}_{ji} = \mathbf{x}_j - \mathbf{x}_i$, $\otimes$ denotes a Kronecker product operator (i.e., $\mathbf{a} \otimes \mathbf{b} = \mathbf{ab}^T$), $\mathbf{L}_i$ denotes a kernel correction matrix and $W_{ij} = W(\mathbf{X}_{ji}, r)$, $\mathbf{X}_{ji} = \mathbf{X}_j - \mathbf{X}_i$ and $W(\mathbf{X}, r) : \mathbb{R}^3 \to \mathbb{R}$ denote an SPH kernel having a kernel radius r, and $\mathbf{x}$ and $\mathbf{X}$ denote a deformed and reference (i.e. undeformed) position of the particle, respectively.

3. The smoothed particle hydrodynamics (SPH)-based hyperelastic simulation apparatus of claim 2, wherein the hyperelastic energy is defined by the following Equation.

[Equation]

$$E_{\text{he}}(\mathbf{x}) = \sum_i V_i \Psi(\mathbf{F}_i)$$

wherein, $\Psi$ denotes an elastic energy density function and varies depending on a type of elastic material of the deformable body.

4. The smoothed particle hydrodynamics (SPH)-based hyperelastic simulation apparatus of claim 3, wherein the deformation gradient is approximated through a zero energy mode.

5. The smoothed particle hydrodynamics (SPH)-based hyperelastic simulation apparatus of claim 4, wherein the new state is expressed by the following Equation.

[Equation]

$$\mathbf{x}_{n+1} = \mathbf{x}_n + h\mathbf{v}_{n+1}$$
$$\mathbf{v}_{n+1} = \mathbf{v}_n + h\mathbf{M}^{-1}(\mathbf{f}_{\text{ext}} + \mathbf{f}_{\text{int}}(\mathbf{x}_{n+1}))$$

wherein, h denotes a time step size, M denotes a mass matrix, $f_{\text{ext}}$ denotes external force, $f_{\text{int}}(x)$ denotes internal force including elastic force and zero energy mode suppression force of an SPH framework, $\mathbf{x}(\in \mathbb{R}^{3m})$ denotes the position of the particle, and **V** denotes the velocity of the particle.

6. The smoothed particle hydrodynamics (SPH)-based hyperelastic simulation apparatus of claim 5, wherein the internal force is evaluated as a negative slope and the new state is expressed by the following Equation.

[Equation]

$$\frac{\mathbf{M}}{h^2}(\mathbf{x}_{n+1} - \mathbf{y}_n) + \nabla E_{\text{he}}(\mathbf{x}_{n+1}) + \nabla E_{\text{ze}}(\mathbf{x}_{n+1}) = \mathbf{0}$$

wherein, $\mathbf{y}_n = \mathbf{x}_n + h\mathbf{v}_n + h^2\mathbf{M}^{-1}\mathbf{f}_{\text{ext}}$.

7. The smoothed particle hydrodynamics (SPH)-based hyperelastic simulation apparatus of claim 6, wherein the optimization problem of the objective function is reformulated into the following Equation.

[Equation]

$$g(\mathbf{x}_{n+1}) = \frac{1}{2h^2}\|\mathbf{x}_{n+1} - \mathbf{y}_n\|_{\mathbf{M}}^2 + E_{\text{he}}(\mathbf{x}_{n+1}) + E_{\text{ze}}(\mathbf{x}_{n+1})$$

wherein, $\|\cdot\|_{\mathbf{M}}^2$ denotes a weighted Frobenius norm.

8. The smoothed particle hydrodynamics (SPH)-based hyperelastic simulation apparatus of claim 1, wherein the program instructions optimize the objective function through an iterative approach using a limited-memory Broyden-Fletcher-Goldfarb-Shanno (L-BFGS) algorithm.

9. A smoothed particle hydrodynamics (SPH)-based hyperelastic simulation method in an apparatus including a processor and a memory, the smoothed particle hydrodynamics (SPH)-based hyperelastic simulation method comprising:

generating an SPH-based deformable body composed of m particles;
defining states of each of m particles in a discrete time as a set of positions and velocities, for then SPH-based deformable body composed of the m particles;
approximating hyperelastic energy of each of the m particles using a rest-pose volume, a material parameter, a vectorized deformation gradient, and a projection of the vectorized deformation gradient in order to optimize an objective function for solving new states of each of the m particles;
searching for an initial approximation of a Hessian matrix using the approximated hyperelastic energy; and
simulating the SPH-based deformable body based on the searched initial approximation.

10. A computer program stored in a computer-readable recording medium that performs the method of claim 9.

# Figure 1

# Figure 2

**Algorithm 1:** An iteration of L-BFGS

$\mathbf{q} := -\nabla g(\mathbf{x}_k)$

**for** $i = k - 1, \cdots, k - m$ **do**

$\quad \mathbf{s}_i := \mathbf{x}_{i+1} - \mathbf{x}_i$

$\quad \mathbf{t}_i := \nabla g(\mathbf{x}_{i+1}) - \nabla g(\mathbf{x}_i)$

$\quad \rho_i := tr(\mathbf{t}_i^T \mathbf{s}_i)$

$\quad \varsigma_i = tr(\mathbf{s}_i^T \mathbf{q})/\rho_i$

$\quad \mathbf{q} := \mathbf{q} - \varsigma_i \mathbf{t}_i$

**end**

$\mathbf{r} := \mathbf{A}_0^{-1}\mathbf{q} \quad$ // initial approximation of Hessian

**for** $i = k - m, \cdots, k - 1$ **do**

$\quad \eta := tr(\mathbf{t}_i^T \mathbf{r})/\rho_i$

$\quad \mathbf{r} := \mathbf{r} + \mathbf{s}_i(\varsigma_i - \eta)$

**end**

$\mathbf{d}(\mathbf{x}_k) := -\mathbf{r} \quad$ // descent direction

$\mathbf{x}_{k+1} := \mathbf{x}_k + \mathbf{d}(\mathbf{x}_k)$

# Figure 3

Frame 1

Frame 50

Frame 84

Frame 126

# Figure 4

(a) Ours, $h = 0.03$, 1 iteration

(b) Ours, $h = 0.03$, 2 iterations

(c) OSS, $h = 0.03$

(d) OSS, $h = 0.003$

Figure 5

L-BFGS       Newton's method

Europäisches
Patentamt

European
Patent Office

Office européen
des brevets

**EUROPEAN SEARCH REPORT**

Application Number

EP 23 21 1788

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | REN HUILONG ET AL: "Dual-support smoothed particle hydrodynamics in solid: variational principle and implicit formulation", ENGINEERING ANALYSIS WITH BOUNDARY ELEMENTS, ELSEVIER, AMSTERDAM, NL, vol. 108, 30 August 2019 (2019-08-30), pages 15-29, XP085845558, ISSN: 0955-7997, DOI: 10.1016/J.ENGANABOUND.2019.05.024 [retrieved on 2019-08-30] * the whole document * | 1-10 | INV. G06F30/25 G06F30/28 G16C10/00 |
| X | CHENFANFU JIANG ET AL: "The material point method for simulating continuum materials", 20160724; 1077952576 - 1077952576, 24 July 2016 (2016-07-24), pages 1-52, XP058275917, DOI: 10.1145/2897826.2927348 ISBN: 978-1-4503-4289-6 * page 10 - page 35 * * page 39 - page 48 * | 1-10 | |
| X | LI XUAN ET AL: "BFEMP: Interpenetration-free MPM-FEM coupling with barrier contact", COMPUTER METHODS IN APPLIED MECHANICS AND ENGINEERING, NORTH-HOLLAND, AMSTERDAM, NL, vol. 390, 26 November 2021 (2021-11-26), XP086934027, ISSN: 0045-7825, DOI: 10.1016/J.CMA.2021.114350 [retrieved on 2021-11-26] * the whole document * | 1-10 | TECHNICAL FIELDS SEARCHED (IPC) G06F G16C |

-/--

The present search report has been drawn up for all claims

| Place of search | Date of completion of the search | Examiner |
|---|---|---|
| Munich | 2 May 2024 | Kraska, Nora |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

page 1 of 2

## EUROPEAN SEARCH REPORT

**Application Number**

EP 23 21 1788

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | HÉBERT ALAIN ED – VAN DAM HUGO ET AL: "A general presentation of the SPH equivalence technique in non-fundamental mode cases", ANNALS OF NUCLEAR ENERGY, PERGAMON PRESS, OXFORD, GB, vol. 141, 28 January 2020 (2020-01-28), XP086094940, ISSN: 0306-4549, DOI: 10.1016/J.ANUCENE.2020.107323 [retrieved on 2020-01-28] * the whole document * | 1-10 | |
| A | XINLEI WANG ET AL: "Hierarchical Optimization Time Integration for CFL-rate MPM Stepping", ARXIV.ORG, CORNELL UNIVERSITY LIBRARY, 201 OLIN LIBRARY CORNELL UNIVERSITY ITHACA, NY 14853, 18 November 2019 (2019-11-18), XP081535035, * the whole document * | 1-10 | TECHNICAL FIELDS SEARCHED (IPC) |

The present search report has been drawn up for all claims

| Place of search | Date of completion of the search | Examiner |
|---|---|---|
| Munich | 2 May 2024 | Kraska, Nora |

EPO FORM 1503 03.82 (P04C01)